# EUROPEAN PATENT APPLICATION

(11) **EP 4 741 256 A2**
(43) Date of publication of application: **13.05.2026**
(21) Application number: 25215411.7
(22) Date of filing: 12.11.2025
(51) Int. Cl.: B62B 5/06, B62B 7/12, B62B 7/14, B62B 9/20, B62B 9/26, B62B 3/00, B62B 7/00, B62B 9/12

(54) **ASSEMBLY FOR A DEVICE FOR TRANSPORTING A CHILD**

(30) Priority: 12.11.2024 NL 2039053; 12.11.2024 NL 2039054
(71) Applicant: Hummingbird B.V., 5037 RV Tilburg (NL)
(72) Inventor: WUBBEN, Lukas Petrus Franciscus, 5037RV Tilburg (NL); VAN HOLLAND, Sander, 5037RV Tilburg (NL)
(74) Representative: Arnold & Siedsma

(57) **Abstract**

The present invention relates to an assembly and device for transporting a child.

According to the invention, the assembly comprises a frame comprising a frame body (10) having an upper side and a lower side, a supporting member (11) coupled to frame body (10) at the lower side, and a plurality of wheels (12, 13) each coupled to a respective wheel receiving section (121, 131) of the frame body (10) at the lower side.

The assembly further comprises one or more child supporting devices (200, 300) and a U-shaped push bar (30).

According to the invention, the U-shaped push bar (30) is configured to be releasably coupled to the frame, and in that the assembly (1) is configured to be switchable between a first configuration in which a child supporting device (200, 300) among the one or more child supporting devices and the push bar (30) are both coupled to the frame body (10) at the upper side, and a second configuration in which a child supporting device (200) among the one or more child supporting devices is supported by the supporting member (11) and wherein the push bar (30) is coupled to frame body (10) at the lower side.

## Description

The present invention relates to an assembly and device for transporting a child. The present invention further relates to a coupling assembly used in such an assembly or device. The present invention also relates to a device for transporting a child comprising the coupling assembly. In addition, the present invention relates to a travel cot.

An example of a known assembly for transporting a child comprises a frame, one or more child supporting devices such as a child seat or travel cot that can be coupled to the frame, and a U-shaped push bar.

The frame comprises a frame body having an upper side and a lower side, a supporting member coupled to frame body at the lower side, and a plurality of wheels each coupled to a respective wheel receiving section of the frame body at the lower side.

Assemblies of the type above have different applications. For example, the assembly can be used to transport a child that is seated in a child seat. Alternatively, the assembly can be used to transport a child that is lying down in a travel cot. Here, it is noted, that most assemblies are sold with different types of child supporting devices such as a child seat or travel cot.

Another known device for transporting a child is a boulder cart, beach cart, or child wagon. In this application, one or more children can be transported simultaneously. Typically, during transport, the child or children is/are sitting in an upright position.

To be able to have all the applications described above, a parent or other user is required to purchase a plurality of assemblies/devices. This can be both costly and space consuming.

Assemblies for transporting a child exist in many shapes and forms. Typically, the construction of such assemblies needs to be strong enough to prevent any risk of the child falling out. The parts of the assembly therefore need to be secured or fixed adequately to one another. As a result, in prior art assemblies, a user cannot easily replace a damaged part. Typically, once a given part of the assembly has become damaged, a user is either required to send the entire assembly back to the manufacturer or other service center, or the user is required to buy another assembly. Another problem with prior art assemblies is that recycling after the lifetime of the device is complicated. Once the assembly is discarded, there is little to no opportunity to re-use parts that are still functional.

An object of the present invention is to provide an assembly for transporting a child in which at least some of the abovementioned problems are at least partially addressed.

To that end, the present invention provides an assembly that is characterized in that the U-shaped push bar is configured to be releasably coupled to the frame, and in that the assembly is configured to be switchable between a first configuration in which a child supporting device among the one or more child supporting devices and the push bar are both coupled to the frame body at the upper side, and a second configuration in which a child supporting device among the one or more child supporting devices is supported by the supporting member and wherein the push bar is coupled to frame body at the lower side.

With the assembly according to the present invention, three different applications can be realized with a single assembly. More specifically, in the first configuration, a child can be transported in a lying position, using a travel cot, or in an siting position, using a child seat. In the second application, using the same or a different travel cot, one or more children can be transported in a sitting position.

The assembly may form a stroller in the first configuration. In this case, the one or more child supporting devices may comprise a child seat. Although configured to support a child in a sitting position, the present invention equally relates to child seats that are adjustable between a state in which a child can be supported in a sitting position and a state in which a child can be supported in a lying position. The present invention equally relates to child seats that can be configured to be arranged in one or more states in between the abovementioned two states.

The one or more child supporting devices may additionally or alternatively comprise a travel cot. In this case, the assembly may form a boulder cart, beach cart, or child wagon in the second configuration. Furthermore, the travel cot may comprise a child supporting area configured to support one or more children. This child supporting area can be configured to be transformable between a first state in which the child supporting area is defined by a substantially flat supporting surface allowing a child to lie on the supporting surface, and a second state in which part of the child supporting area is arranged downset from a remainder of the child supporting area allowing the one or more children to sit on the remainder of the child supporting area while feet of the one or more children are supported by the downset part of the child supporting area. The child supporting area can be defined by at least two members that are releasably and/or moveably connected to each other.

The travel cot may comprise a bottom wall that defines the child supporting area and a side wall. In this case, the travel cot can be configured to accommodate a child inside the travel cot on a first side of the bottom wall. The bottom wall may comprise a first part, a second part, and a third part arranged in between the first part and second part. The third part may comprise a first subpart and a second subpart. The second subpart may connect the second part to the first subpart. The travel cot may further comprise a flexible supporting element that extends on a second side of the bottom wall opposite to the first side. The flexible supporting element may for example comprise a band or strip of suitable fabric such as nylon or polyester webbing or leather. Other options for realizing a flexible supporting element comprise chain like elements.

The travel cot may then be configurable in a first state, corresponding to the first state of the child supporting area, in which the first part, second part, and third part are arranged in line, and in a second state, corresponding to the second state of the child supporting area, in which the flexible supporting element supports the first subpart at a height position remote from a height position of the first and second parts. When the travel cot is configured in the second state, the travel cot can be configured to allow a child to sit on the first or second part while supporting feet of the child by the first subpart. Furthermore, the side wall may comprise a circumferential ridge that supports the first and second parts of the bottom wall, and that supports the third part of the bottom wall when the travel cot is configured in the first state.

To enable the coupling between the U-shaped push bar and the frame in the first configuration, the assembly may further comprise a pair of first coupling units, wherein the first coupling units are configured to be coupled to the frame body at the upper side in the first configuration or wherein the first coupling units are comprised by the frame body at the upper side. More specifically, the first coupling units can either be coupled to the frame body or they can be part of the frame body. The assembly may further comprise a pair of second coupling units, wherein each second coupling unit is configured to be coupled to a respective end of the push bar in at least the first and second configuration, or wherein the pair of second coupling units is comprised by the push bar at respective ends of the push bar. More specifically, the second coupling units can either be coupled to the push bar or they can be part of the push bar. In the first configuration, the first coupling units are coupled to the second coupling units for the purpose of coupling the push bar to the frame body.

The assembly may further comprise a pair of third coupling units, wherein the third coupling units are configured to be coupled to the frame body at the lower side in the second configuration or wherein the third coupling units are comprised by the frame body at the lower side. More specifically, the third coupling units can either be coupled to the frame body or they can be part of the frame body. In the second configuration, the second coupling units are coupled to the third coupling units for the purpose of coupling the push bar to the frame body. The first and third coupling units can be identical.

In an example in which the pair of third coupling units can be coupled to the frame body, the assembly may further comprise a pair of first adapters, wherein each first adapter is provided with a third coupling unit, and wherein, in the second configuration, the pair of first adapters is releasably coupled to the frame body at the lower side.

A pair of first wheels among the plurality of wheels may be removably and rotatably coupled to the wheel receiving sections of the frame body. In the second configuration, each first adapter may be removably coupled to the frame body, wherein a respective first adapter is arranged in between a respective first wheel and the frame body. The pair of the first adapters may be configured to be removed when switching from the second configuration to the first configuration by removing the first wheels and by subsequently removing the first adapters and reattaching the first wheels.

Each wheel receiving section may comprise a body with an opening in which a wheel axle of a respective first wheel is releasably couplable. Each first adapter may comprise an end part that is provided with an opening that allows the end part to be arranged over the body of the wheel receiving section. Furthermore, in the second configuration, each first adapter may be configured to be rotatable about a rotational axis that is parallel to the wheel axle of the respective first wheel.

The assembly may further comprise a pair of second adapters. Each second adapter may be preferably configured to be removably coupled to frame body at the upper side. In the first configuration, the child supporting device may be coupled to the frame body using the pair of second adapters. In other embodiments, the pair of second adapter is part of the frame body.

The frame body may comprise a pair of joint members. Each joint member may be configured to be coupled to a respective end of the push bar in the first configuration.

The assembly may further comprise a pair of first arms and a pair of second arms. Each first arm may extend between a respective first wheel receiving section and a respective joint member and each second arm may extend from a respective joint member towards the lower side.

An end of each second arm remote from the corresponding joint member may be hingedly coupled to the supporting member. Each first arm may comprise a first sub-arm, a second sub-arm, and a first arm hinge. Each first sub-arm may be arranged in between the corresponding first wheel receiving section and the corresponding first arm hinge. Each second sub-arm may be arranged in between the corresponding first arm hinge and the corresponding joint member. Each second sub-arm may be hingedly coupled to the corresponding joint member. Each first sub-arm may be hingedly coupled to the supporting member. The first arm hinge is configured to allow the first sub-arm and second sub-arm to pivot relative to each other.

Each first arm hinge may comprise a resilient element resisting the first sub-arm pivoting towards the second sub-arm and/or the first coupling units may be provided in the joint members.

The plurality of wheels may comprise at least one second wheel that is rotatably coupled to a respective wheel receiving section of the frame body. The end of each second arm remote from the corresponding joint member may be connected to, either directly or through a further tubular member, or may comprise the wheel receiving section to which the at least one second wheel is coupled. The at least one second wheel may comprise a pair of second wheels.

The wheel receiving section for each second wheel may be configured to allow the second wheel to swivel.

The wheel receiving section for each second wheel may comprise a swivel limiter that is configured to be operable in a first state in which it does not limit a swiveling angle of the second wheel, and in a second state in which it limits the swiveling angle to be in a predefined range. The predefined range may be from 180+A degrees to 180-A degrees, wherein 0 degrees corresponds to the position of the second wheel when the assembly is used in the first configuration and is moved straight ahead, and wherein A is preferably less than 160 degrees, more preferably less than or equal to 145 degrees. The swivel limiter may be manually operable.

Each swivel limiter may comprise a slider and at least one limiting element. When the corresponding second wheel swivels, the at least one limiting element performs a rotating movement together with the second wheel and the slider remains stationary relative to the frame body. When the swivel limiter is operating in the first state, the slider is in a first position allowing the corresponding second wheel to swivel freely. When the swivel limiter is operating in the second state, the slider is in a second position blocking the at least one limiting element to rotate further when the at least one limiting element comes into contact with the slider thereby limiting the swiveling angle of the second wheel.

The first wheels may be rear wheels and the at least one second wheel can be a front wheel.

The push bar may comprise a pair of outer tubular members and a U-shaped tubular member of which ends are received in the pair of outer tubular members. The U-shaped tubular member may be configured to be telescopically adjustable in the pair of the outer tubular members.

An end of each outer tubular member remote from the U-shaped tubular member may be provided or coupled with a respective second coupling unit.

The supporting member may comprise a ring-shaped frame. The assembly may further comprise a flexible bag or net that is connected or connectable to the ring-shaped frame. Such bag or net can be used for storing items, such as groceries, when the assembly is in the first configuration. The ring-shaped frame may be configured to support a travel cot at or near the bottom wall thereof.

The assembly may further comprise one or more coupling assemblies. Each coupling assembly may comprise a first at least partially hollow member having a wall that is provided with an opening. The coupling assembly may further comprise a second member comprising a first part and a second part configured to be arranged inside and outside of the first at least partially hollow member, respectively, wherein the first part comprises a first leg and a second leg. The coupling assembly may further comprise a spreading unit configured for spreading apart the first and second legs to thereby clamp the first part in the first at least partially hollow member. The spreading unit is preferably reversibly removable through and/or insertable in the opening.

Because the spreading unit can be removed through the opening of the first member, the clamping action of the first and second legs can be broken, allowing the first and second members to be decoupled.

Using the one or more coupling assemblies, the device for transporting a child can be constructed in such a manner that at least some parts can be removed from the device for repair, replacement, or maintenance. A further advantage is that not all parts of the device are prone to wear to the same extent. The one or more coupling assemblies therefore allow parts that are damaged or otherwise compromised to be replaced while maintaining the rest of the device with the original parts. Consequently, the one or more coupling assemblies allow the use of refurbished devices. Additionally, elements that are in need of replacement can be easily replaced with a new element, rather than having to replace the complete device, allowing for longer use of the same device.

The abovementioned first sub-arm may comprise, at an end where it is connected to a respective wheel receiving section, one of the first member and second member of the coupling assembly. Said respective wheel receiving section may then comprise the other of the first member and second member of the coupling assembly. Additionally or alternatively, the first sub-arm may comprise, at an end where it is connected to a respective first arm hinge, one of the first member and second member of the coupling assembly. Said respective first arm hinge may then comprise the other of the first member and second member of the coupling assembly.

The second sub-arm may comprise, at an end where it is connected to a respective joint member, one of the first member and second member of the coupling assembly. Said respective joint member may then comprise the other of the first member and second member of the coupling assembly. Additionally or alternatively, the second sub-arm may comprise, at an end where it is connected to a respective first arm hinge, one of the first member and second member of the coupling assembly. Said respective first arm hinge may then comprise the other of the first member and second member of the coupling assembly.

The present invention is not limited to the components above. Other pairs of components can also be connected using the coupling assembly, wherein one component comprises the first member and the other member the second member. For example, the coupling assembly can be used for connecting a second arm to a wheel receiving section, for connecting the wheel receiving section to a further tubular member through which it is connected to another wheel receiving section.

The first part of the second member may comprise an opening between the first leg and the second leg. The first leg and second leg are preferably arranged to pivot and/or deform elastically when clamping the first part in the first member as a result of the spreading unit being arranged in between them.

The second member may further comprise a third part between the first part and the second part. The third part is configured for preventing the second part being inserted in the first member and allowing the opening of the first member to be aligned with the opening of the first part of the second member. The third part may be shaped as a ridge. Furthermore, the spreading unit may have a tapered threading.

At least one of the first part and the second part of the second member may be made out of polymeric material, such as polyamide, polypropylene or polyoxmethylene. Additionally, or alternatively, the first member can be made out of aluminum, steel, carbon, polyethylene, or polypropylene.

Each coupling assembly may further comprise a stopping device opposite from the opening of the first member that is configured to provide a sound when the spreading unit has been sufficiently inserted into that opening with the first part of the second member being arranged in the first member.

The spreading unit may comprise a top surface with which the spreading unit has been or will be inserted into the opening of the first member first, wherein the top surface is provided with a rib or ridge. The stopping device may comprise a first resilient protruding tab connected to the first leg and that extends towards the second leg and a second resilient protruding tab connected to the second leg and that extends towards the first leg. A space between the first and second protruding tabs may correspond to a shape of the rib or ridge. The first and second protruding tabs and the rib or ridge may be positioned such that when the spreading unit is being inserted into the opening for spreading the first and second legs, it pushes against and elastically deforms the first and second protruding tabs until it reaches a desired position and orientation at which point the space between the protruding tabs matches the orientation of the rib or ridge causing the protruding tabs to snap back thereby making a noise.

An outer side of the spreading unit may be configured to be in line with the wall of the first member when the spreading unit has been sufficiently inserted in the opening of the first member for coupling the first and second members.

According to a second aspect of the invention, a device for transporting a child is provided comprising the assembly as described above configured in the first or second configuration.

According to a third aspect of the invention, a coupling assembly for a device for transporting a child is provided as described above.

According to a fourth aspect of the invention, a device for transporting a child is provided comprising the coupling assembly.

According to a fifth aspect of the invention, a travel cot is provided as described above.

Next, the invention will be described in more detail referring to the appended figures, which show a preferred embodiment of the device according to the invention, and are not intended to limit the scope of the invention in any way, wherein:
Figure 1 illustrates an embodiment of an assembly for transporting a child according to the present invention;
Figure 2 illustrates a side view of the frame of the assembly of figure 1;
Figure 3 illustrates a detailed perspective view of the U-shaped push bar of the assembly of figure 1;
Figure 4 shows a detailed view of a joint member of the assembly of figure 1;
Figures 5-8 illustrate an embodiment of an assembly for transporting a child in a first configuration according to the present invention;
Figure 9 illustrate an embodiment of an assembly for transporting a child in a second configuration according to the present invention;
Figure 10 illustrates a perspective view of a wheel-receiving section of the frame of the assembly of figure 11;
Figures 11-12 illustrate an embodiment of a travel cot in accordance with the present invention in a first and second state, respectively;
Figures 13-14 illustrate a swiveling wheel of the assembly of figure 1; and
Figures 15-19 illustrate an embodiment of a coupling assembly comprised in a device for transporting a child according to the present invention.

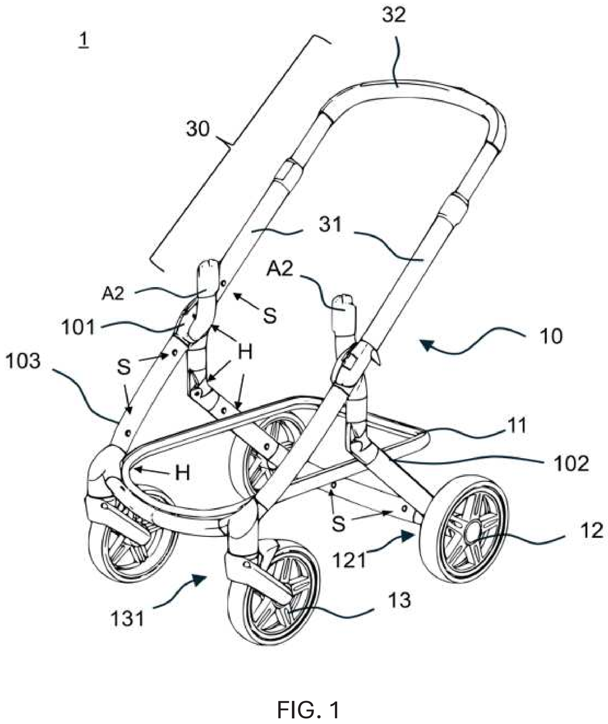

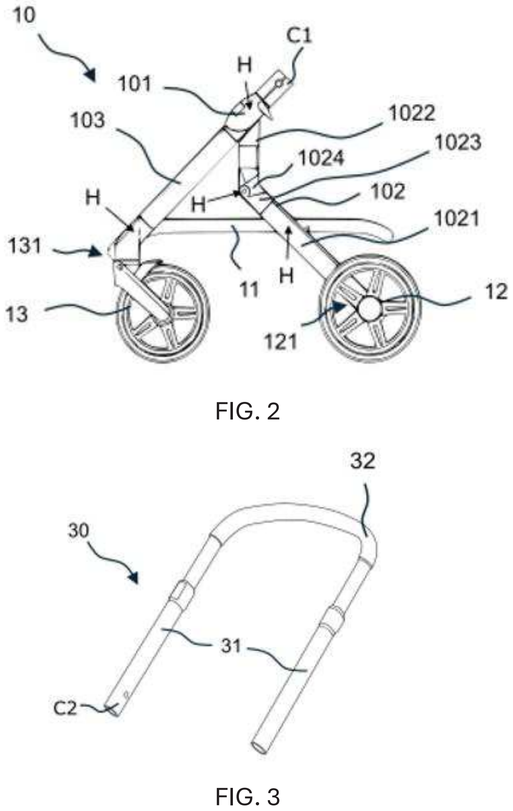

Figure 1 illustrates an embodiment of an assembly 1 for transporting a child according to the present invention. Assembly 1 comprises a frame comprising a frame body 10. Frame body 10 has an upper side and a lower side and is shown in more detail in figure 2.

Frame body 10 further comprises a supporting member 11 coupled to frame body 10 at the lower side and a plurality of wheels 12, 13. Wheels 12, 13 are each coupled to a respective wheel receiving section 121, 131 of frame body 10 at the lower side. Here, wheels 12 are referred to as rear wheels or first wheels, and wheels 13 as front wheels or second wheels.

Assembly 1 comprises a U-shaped push bar 30, shown in more detail in figure 3. Push bar 30 comprises a pair of outer tubular members 31 and a U-shaped tubular member 32 of which ends are received in the pair of outer tubular members 31. U-shaped tubular member 32 is configured to be telescopically adjustable in the pair of outer tubular member 31.

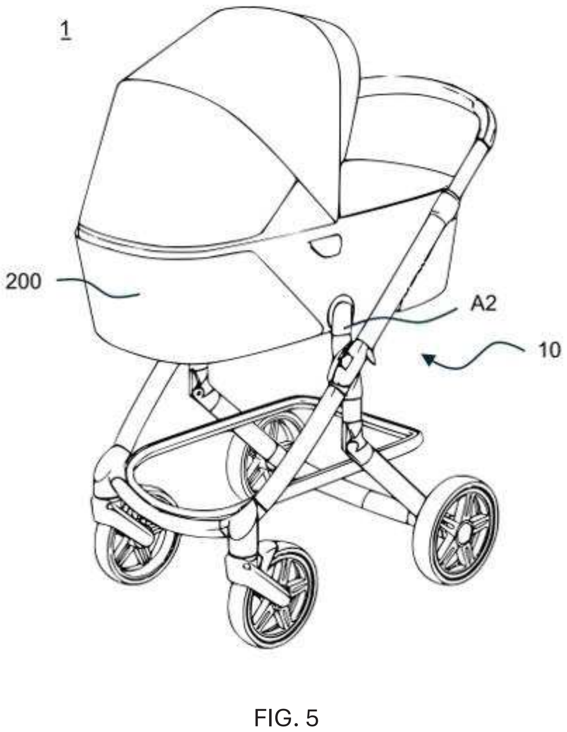

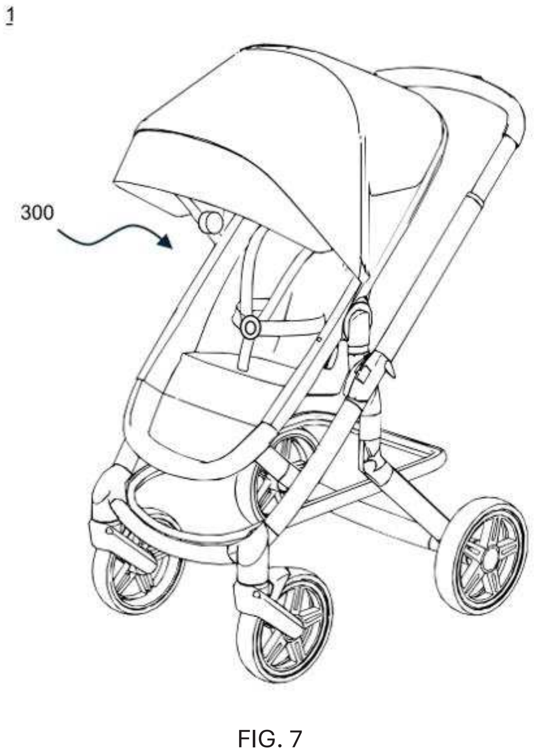

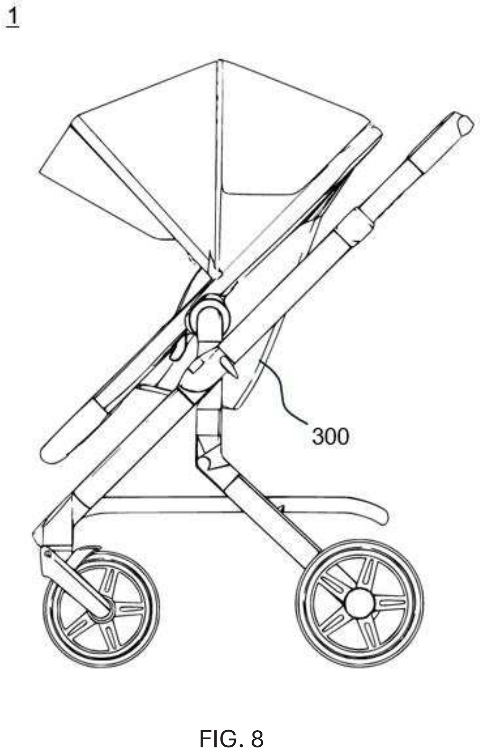

Assembly 1 further comprises a child supporting device, such as a travel cot 200 shown in figures 5-6, and 11-12, or a child seat 300 shown in figures 7 and 8.

Figure 2 illustrates a side view of the frame of the assembly of figure 1. In this figure, the letter "H" indicates a hinged connection between components.

Frame body 10 comprises a pair of first arms 102 that each extend between a respective first wheel receiving section 121 and a respective joint member 101 and that are each hingedly coupled to supporting member 11. Frame body 10 further comprises a pair of second arms 103 that each extend from a respective joint member 101 towards the lower side, wherein an end of each second arm 103 remote from the corresponding joint member 101 is hingedly coupled to supporting member 11.

Each first arm 102 comprises a first sub-arm 1021, a second sub-arm 1022, and a first arm hinge 1023. Each first sub-arm 1021 is arranged in between a corresponding first wheel receiving section 121 and a corresponding first arm hinge 1023. Each second sub-arm 1022 is arranged in between a corresponding first arm hinge 1023 and a corresponding joint member 101.

Each second sub-arm 1022 is hingedly coupled to corresponding joint member 101. Each first sub-arm 1021 is hingedly coupled to support member 11. Each first arm hinge 1023 comprises a resilient element 1024 resisting first sub-arm 1021 pivoting towards second sub-arm 1022. In this manner, a suspension is provided to the assembly for transporting a child allowing shocks to be at least partially absorbed during use.

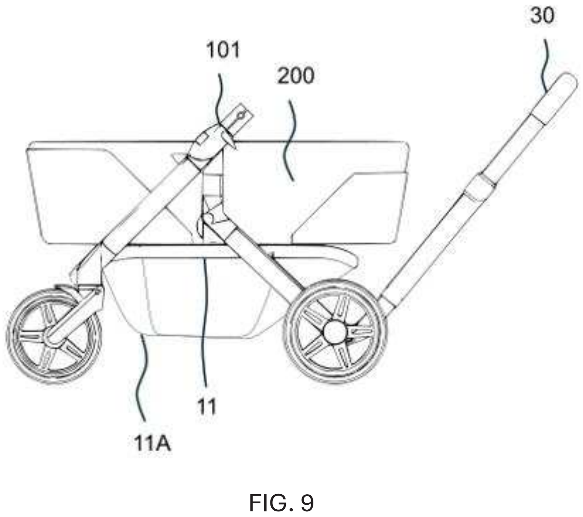

Supporting member 11 comprises a ring-shaped frame. Assembly 1 may further comprise a flexible bag or net 11A that is connected or connectable to the ring-shaped frame 11, as shown in figure 9.

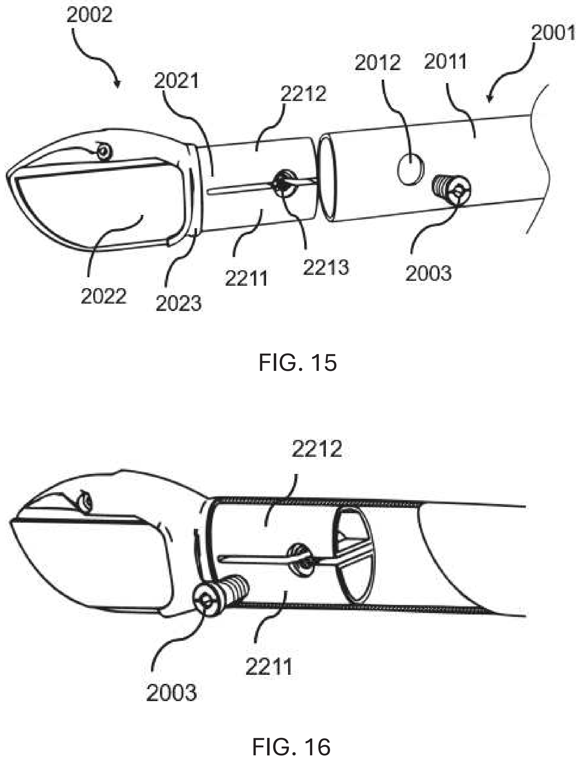

As shown in figure 2, frame body 10 is provided with a pair of first coupling units C1 arranged at or near joint members 101. As shown in figure 3, U-shaped push bar 30 is provided with second coupling units C2 at the ends of outer tubular members 31. As will be explained referring to figures 15-20, U-shaped push bar 30 can be coupled to frame body 10 using first and second coupling units C1, C2.

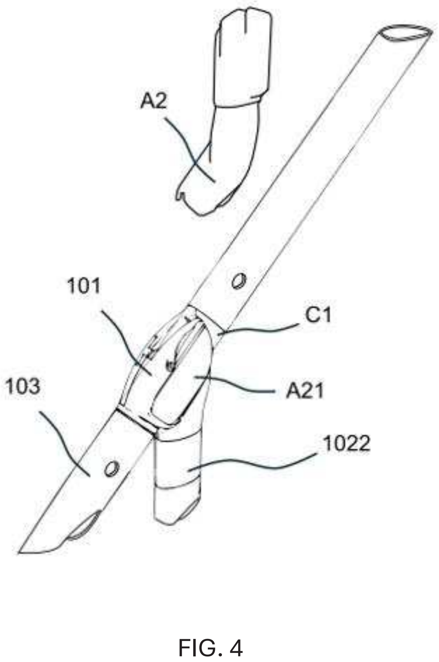

Figure 4 illustrates a detailed view of joint member 101. As shown, joint member 101 is connected to or comprises a first coupling unit C1, and is connected to second arm 103 and second sub-arm 1022. It further comprises a coupling structure A21 by which an adaptor A2 can be removably attached to joint member 101. Adaptor A2 can be used for attaching a child supporting device, such as a travel cot or child seat, to the frame body 10. In other embodiments, adaptor A2 is fixedly attached to joint member 101.

Assembly 1 is configured to be switchable between a first configuration and a second configuration. Figures 5-8 show assembly 1 configured in the first configuration, whereas figure 9 shows assembly 1 configured in the second configuration.

In the first configuration, assembly 1 forms a stroller. The child supporting device may comprise a travel cot 200, as shown in figures 5-6, or a child seat 300, as shown in figure 7. Both child supporting devices can be coupled to frame body 10 using adaptors A2. The present invention does not exclude other child supporting devices to be mounted to frame body 10.

In the first configuration, both the child supporting device 200, 300 and the U-shaped push bar 30 are coupled to frame body 10 at the upper side thereof using adaptor A2 and coupling units C1, C2, respectively. In the first configuration, assembly 1 may form a stroller.

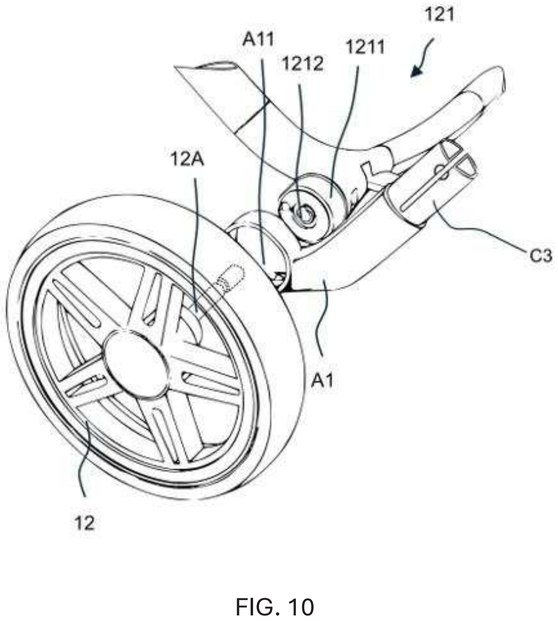

In the second configuration, shown in figure 9, child supporting device 200 is supported by supporting member 11, which is embodied in figure 9 as a ring-shaped frame arranged at the lower side of frame body 10 and in which travel cot 200 is arranged. Furthermore, in the second configuration, U-shaped push bar 30 is coupled to frame body 10 at the lower side thereof using coupling units C3, C2. This is shown in more detail in figure 10, which illustrates a pair of adapters A1 (only one is shown) coupled to frame body 10 at the lower side. In the second configuration, assembly 1 may form a boulder cart.

As shown in figure 10, wheel receiving section 121 comprises a body 1211 with an opening 1212 in which a wheel axle 12A of a respective first wheel 12 is received. Adapter A1 comprises an end part that is provided with an opening A11 that allows the end part to be arranged over body 1211 of wheel receiving section 121.

In the second configuration of assembly 1, adapter A1 is rotatable about a rotational axis that is parallel to wheel axle 12A of first wheel 12. Adaptor A1 comprises a third coupling unit C3. Coupling units C2, C3 can be coupled for the purpose of coupling U-shaped push bar 30 to the lower side of frame body 10.

When switching from the first to the second configuration, a user may decouple coupling units C2, C3, detach wheel 12 from wheel receiving section 121, remove adaptor A1, and re-attach wheel 12 to wheel receiving section 121.

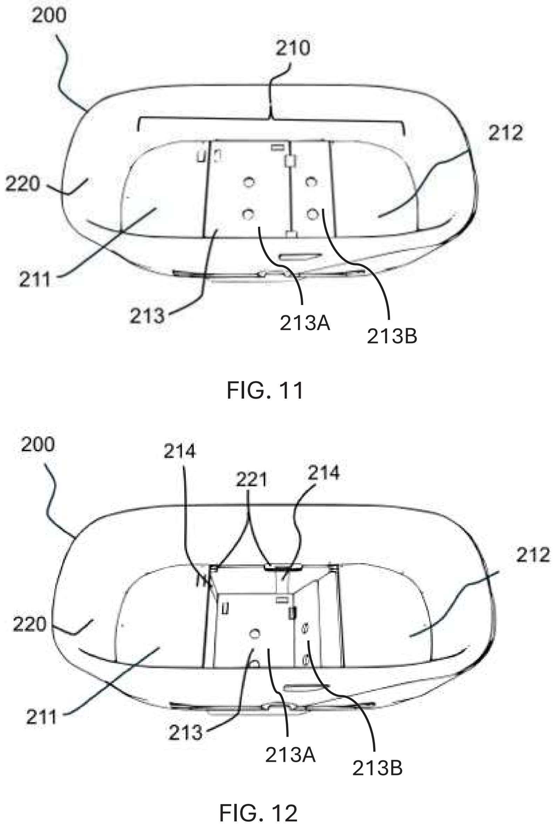

Figure 11 shows an embodiment of travel cot 200 when assembly 1 is configured in the first configuration. Travel cot 200 comprises a bottom wall 210 and a side wall 220. Travel cot 200 is configured to accommodate a child inside travel cot 200 on a first side of bottom wall 210. Bottom wall 210 comprises a first part 211, a second part 212, and a third part 213 arranged in line between first part 211 and second part 212. Third part 213 comprises a first subpart 213A and a second subpart 213B. This configuration of travel cot 200 is referred to as the first state.

Figure 12 shows an embodiment of travel cot 200 when assembly 1 is configured in the second configuration. Here, travel cot 200 is shown in the second state.

Travel cot 200 comprises a flexible supporting element 214 that extends on a second side of bottom wall 210 opposite to the first side. In the second state, flexible supporting element 214 supports first subpart 213A at a height position remote from a height position of first and second parts 211, 212, whereas second subpart 213B connects first subpart 213A to second part 212.

In the second state, travel cot 200 is configured to allow a child to sit on the first or second part 211, 212 while supporting feet of the child by first subpart 213A. Side wall 220 comprises a circumferential ridge 221 that supports first and second parts 211, 212 of bottom wall 210 and that supports third part 213 of bottom wall 210 when travel cot 200 is configured in the first state.

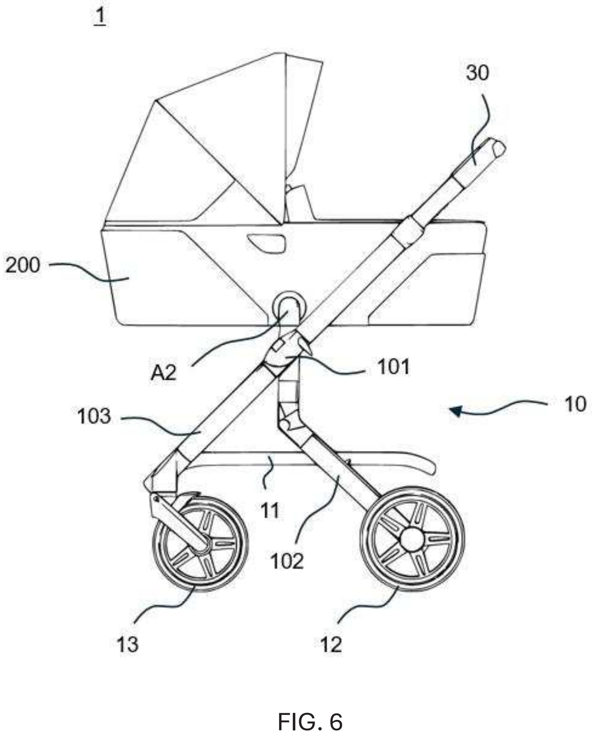

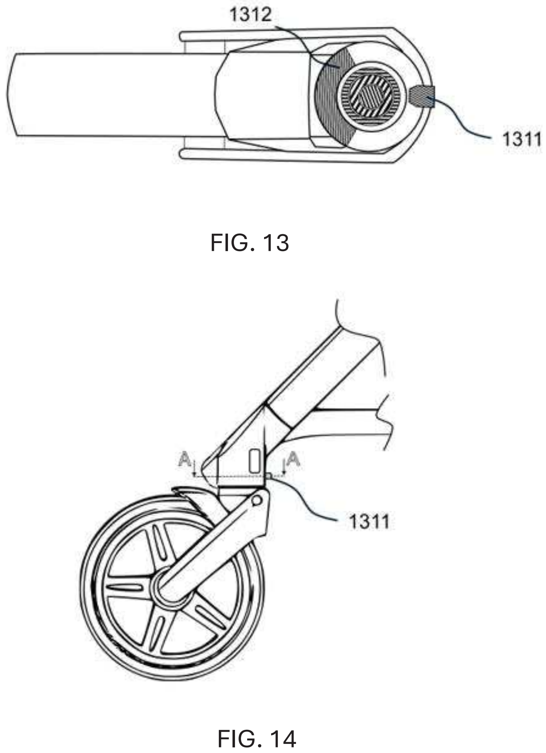

Now referring to figures 13 and 14, wheel receiving section 131 for second wheel 13 is configured to allow second wheel 13 to swivel. Wheel receiving section 131 comprises a swivel limiter that is configured to be operable in two states. In the first state, the swivel limiter does not limit a swiveling angle of second wheel 13. In the second state, the swivel limiter limits the swiveling angle to be in a predefined range, said predefined range being from 180+A degrees to 180-A degrees, wherein 0 degrees corresponds to the position of the second wheel when the assembly is used in the first configuration and is moved straight ahead, such as shown in figure 8, and wherein A is preferably less than 160 degrees, more preferably less than or equal to 145 degrees. This allows for swiveling of the wheels while the device is standing in place. Limiting the angle further prevents the wheel(s) from swiveling to a position as shown in figure 6. In that case, an unstable situation would occur, for example when ascending or descending with the assembly in the second configuration, off a sidewalk.

The swivel limiter is manually operable. Swivel limiter comprises a slider 1311 and at least one limiting element 1312 that is coupled to wheel 13. When second wheel 13 swivels, at least one limiting element 1312 performs a rotating movement together with second wheel 13. On the other hand, slider 1311 remains stationary relative to frame body 10.

When the swivel limiter is operating in the first state, slider 1311 is in a first position allowing corresponding second wheel 13 to swivel freely. When the swivel limiter is operating in the second state, slider 1311 is in a second position blocking at least one limiting element 1312 to rotate further when at least one limiting element 1312 comes into contact with slider 1311 thereby limiting the swiveling angle of second wheel 13.

As described in the above embodiments, assembly 1 is configured to be switched between a first and a second configuration. Switching between these two configuration will be described next.

When a user wants to switch from the second to the first configuration, second coupling units C2 of push bar 30 need to be decoupled from third coupling units C3 of adapters A1, for the purpose of decoupling push bar 30 from the lower side of frame body 10. Then, first wheels 12 need to be removed from wheel receiving section 121. Adapters A1 can then be removed and first wheels 12 can be reattached to wheel receiving sections 121.

Next, push bar 30 is coupled to the upper side of frame body 10 using coupling units C1, C2. Next, a pair of adapters A2 needs to be coupled to the upper side of frame body 10, more specifically to joint members 101. Child supporting member 200 can then be removed from supporting member 11 and be attached, using adaptors A2, to frame body 10 at the upper side thereof. Instead of mounting the child supporting member that was coupled in the second configuration, e.g. travel cot 200, a different child supporting member, e.g. a child seat 300, can be mounted in the first configuration.

Switching from the first configuration to the second configuration will require a user to perform the above described steps in a reversed manner.

In the description of assembly 1, coupling units C1, C2, C3 were mentioned, wherein coupling unit C1 is configured to couple with coupling unit C2, and wherein coupling unit C2 is also configured to couple with coupling unit C3. These pairs of coupling units are part of a coupling assembly. Such coupling assembly can be used for other components in assembly 1. For example, figure 1 shows different locations of coupling assemblies with arrows S. Details of these coupling assemblies will be described next referring to figures 15-20.

Figure 15 shows a detailed view of an embodiment of a coupling assembly 2000 between members of the device. **In** this figure, a first partially hollow member 2001, such as a tubular member, has a wall 2011 with an opening 2012. A second member 2002 comprises a first part 2021 and a second part 2022. Second part 2022 may be a tubular member, a joint member, or a wheel receiving section.

First part 2021 comprises a first leg 2211 and a second leg 2212. The legs are separated by an opening 2213. Opening 2213 may be defined by optionally threaded walls of first leg 2211 and second leg 2212. The legs can be made of a resilient material allowing the legs to deform, bend, and/or pivot. For example, legs 2211, 2212 can be made of a polymeric material, such as polyamide, polypropylene or polyoxmethylene. In some embodiments, first part 2021 and second part 2022 are integrally formed. In other embodiments, first part 2021 is fixedly connected to second part 2022.

Second member 2002 may be inserted into first member 2001 as shown in figure 16. Second member 2002 comprises a third part 2023 between first part 2021 and second part 2022. Third part 2023 prevents second part 2022 being fully inserted in first member 2001. It further allows alignment of opening 2012 of first member 2001 with opening 2213 of first part 2021 of second member 2002. In figure 15, third part 2023 is shaped as a ridge. When wall 2011 abuts third part 2023, opening 2213 is aligned with opening 2012.

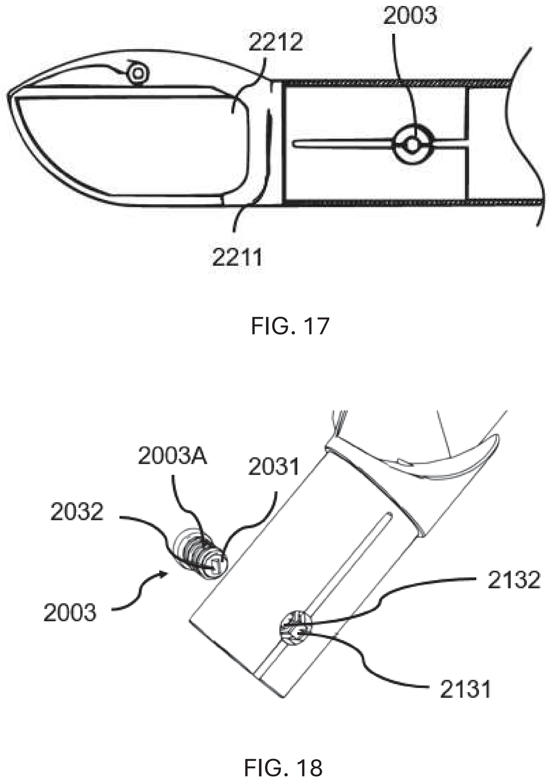

Coupling assembly 2000 further comprises a spreading unit 2003. Spreading unit 2003 is reversibly removable through opening 2012. Inserting spreading unit 2003 in opening 2012 when first part 2021 is inserted in first member 2001 causes spreading unit 2003 to also be inserted in opening 2213, as opening 2012 and opening 2213 are aligned. This is shown in figure 17.

Insertion of spreading unit 2003 will cause first leg 2212 and second leg 2213 to spread apart. As a result, first part 2021 may clamp in first member 2001 thereby coupling first member 2001 and second member 2002. Removing spreading unit 2003 causes first leg 2212 and second leg 2213 to lose their clamping function and allows first and second members 2001, 2002 to be separated from each other. Preferably, legs 2212, 2213 move back to their original position. Any deformation of legs 2212, 2223, if any, is preferably elastic.

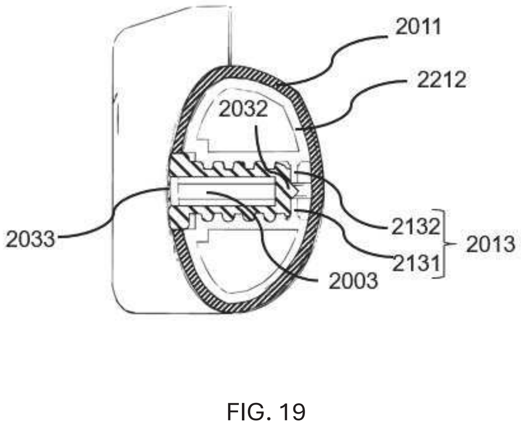

Now referring to figures 18 and 19, spreading unit 2003 may have a threading 2003A that is optionally tapered. An outer side of spreading unit 2003 comprises a rib 2032 arranged at a top surface 2031 of spreading unit 2003.

First leg 2211 is connected to a resilient tab 2131, preferably integrally, that protrudes to the second leg 2212. Similarly, second leg 2212 is connected to a resilient tab 2132, preferably integrally, that protrudes to the first leg 2211. A space between first and second protruding tabs 2131, 2132 corresponds to a shape of rib 2032. Resilient tabs 2131, 2132 are part of a stopping device as will be explained next.

First and second protruding tabs 2131, 2132 and rib 2032 are positioned such that when spreading unit 2003 is inserted into the opening 2012 for spreading first and second legs 2211, 2212, it pushes against and elastically deforms first and second protruding tabs 2131, 2132 until it reaches a desired position and orientation at which point a space between protruding tabs 2131, 2132 matches the orientation of rib 2032. This is shown in cross-sectional view in figure 19. At this point, protruding tabs 2131, 2132 snap back thereby making a noise. This provides feedback to the user that spreading unit 2003 has been sufficiently tightened.

In assembly 1 discussed in connection with figures 1-14, connections between various components can be established using coupling assembly 2000. The following non-exhaustive list describes which component of assembly 1 can be provided with which component of coupling assembly 2000.

| Component | Coupling assembly component |
|---|---|
| C1 | Second member 2002 |
| C2 | First member 2001 |
| C3 | Second member 2002 |
| Ends of first sub-arm 1021 | Second member 2002 |
| Ends of second sub-arm 1022 | Second member 2002 |
| Opposing ends of first arm hinge 1023 | First member 2001 |
| Ends of second arm 103 | First member 2001 |
| Wheel receiving section 131 | Second member 2002 |
| Joint member 101 | Second member 2002 |

In the description above, various embodiments have been described to illustrate the inventive concept of the present invention. However, a skilled person will readily understand that the present invention is not limited to these embodiments but that various modifications are possible without departing from the scope of the invention that is defined by the appended claims. In the claims, any reference signs placed between parentheses shall not be construed as limiting the claim. In the present invention, expressions such as "comprise", "include", "have", "may comprise", "may include", or "may have" indicate existence of corresponding features but do not exclude existence of additional features. The word "a" or "an" preceding an element does not exclude the presence of a plurality of such elements. The usage of the words "first", "second", "third", etc. does not indicate any ordering or priority. These words are to be interpreted as names used for convenience.

## Claims

1. An assembly (1) for transporting a child, comprising:
a frame comprising a frame body (10) having an upper side and a lower side, a supporting member (11) coupled to frame body (10) at the lower side, and a plurality of wheels (12, 13) each coupled to a respective wheel receiving section (121, 131) of the frame body (10) at the lower side;
one or more child supporting devices (200, 300);
a U-shaped push bar (30);
**characterized in that** the U-shaped push bar (30) is configured to be releasably coupled to the frame, and **in that** the assembly (1) is configured to be switchable between:
a first configuration in which a child supporting device (200, 300) among the one or more child supporting devices and the push bar (30) are both coupled to the frame body (10) at the upper side; and
a second configuration in which a child supporting device (200) among the one or more child supporting devices is supported by the supporting member (11) and wherein the push bar (30) is coupled to frame body (10) at the lower side;
wherein the supporting member (11) preferably comprises a ring-shaped frame, the assembly (1) preferably further comprising a flexible bag or net (11A) that is connected or connectable to the ring-shaped frame (11) and/or wherein the ring-shaped frame is configured to support the travel cot (200) at or near the bottom wall (210) thereof.

2. The assembly (1) according to claim 1, wherein the assembly (1) forms a stroller in the first configuration, wherein the one or more child supporting devices optionally comprises a child seat (300), wherein the one or more child supporting devices comprise a travel cot (200), and wherein the assembly (1) forms a boulder cart, beach cart, or child wagon in the second configuration.

3. The assembly (1) according to claim 2, wherein the travel cot (200) comprises a child supporting area configured to support one or more children, wherein the child supporting area is configured to be transformable between:
a first state in which the child supporting area is defined by a substantially flat supporting surface allowing a child to lie on the supporting surface;
a second state in which part of the child supporting area is arranged downset from a remainder of the child supporting area allowing the one or more children to seat on the remainder of the child supporting area while feet of the one or more children are supported by the downset part of the child supporting area;
wherein the child supporting area is preferably defined by at least two members that are releasably and/or moveably connected to each other.

4. The assembly (1) according to claim 3, wherein the travel cot (200) comprises a bottom wall (210) defining the child supporting area and a side wall (220), the travel cot (200) being configured to accommodate a child inside the travel cot (200) on a first side of the bottom wall (210);
wherein the bottom wall (210) comprises a first part (211), a second part (212), and a third part (213) arranged in between the first part (211) and second part (212);
wherein the third part (213) comprises a first subpart (213A) and a second subpart (213B), wherein the second subpart (213B) connects the second part (212) to the first subpart (213A);
wherein the travel cot (200) comprises a flexible supporting element (214) that extends on a second side of the bottom wall (210) opposite to the first side, wherein travel cot (200) is configurable in:
a first state, corresponding to the first state of the child supporting area, in which the first part (211), second part (212), and third part (213) are arranged in line;
a second state, corresponding to the second state of the child supporting area, in which the flexible supporting element (214) supports the first subpart (213A) at a height position remote from a height position of the first and second parts (211, 212).

5. The assembly (1) according to claim 4, wherein, when the travel cot (200) is configured in the second state, the travel cot (200) is configured to allow a child to sit on the first or second part (211, 212) while supporting feet of the child by the first subpart (213A); and/or
wherein the side wall (220) comprises a circumferential ridge (221) that supports the first and second parts (211, 212) of the bottom wall (210), and that supports the third part (213) of the bottom wall (210) when the travel cot (200) is configured in the first state.

6. The assembly (1) according to any of the claims 2-5, further comprising:
a pair of first coupling units (C1), wherein the first coupling units (C1) are configured to be coupled to the frame body at the upper side in the first configuration or wherein the first coupling units (C1) are comprised by the frame body at the upper side;
a pair of second coupling units (C2), wherein each second coupling unit (C2) is configured to be coupled to a respective end of the push bar (30) in at least the first and second configuration, or wherein the pair of second coupling units (C2) is comprised by the push bar at respective ends of the push bar (30);
wherein, in the first configuration, the first coupling units (C1) are coupled to the second coupling units (C2) for the purpose of coupling the push bar (30) to the frame body (10).

7. The assembly (1) according to claim 6, further comprising:
a pair of third coupling units (C3), wherein the third coupling units (C3) are configured to be coupled to the frame body at the lower side in the second configuration or wherein the third coupling units (C3) are comprised by the frame body at the lower side;
wherein, in the second configuration, the second coupling units (C2) are coupled to the third coupling units (C3) for the purpose of coupling the push bar (30) to the frame body (10);
wherein the first and third coupling units (C1, C3) are preferably identical.

8. The assembly (1) according to claim 7, further comprising a pair of first adapters (A1), wherein each first adapter (A1) is provided with a third coupling unit (C3);
wherein, in the second configuration, the pair of first adapters (A1) is releasably coupled to the frame body (10) at the lower side;
wherein, preferably:
a pair of first wheels (12) among the plurality of wheels (12, 13) is removably and rotatably coupled to the wheel receiving sections (121) of the frame body (10), wherein, in the second configuration, each first adapter (A1) is removably coupled to the frame body (10) and arranged in between a respective first wheel (12) and the frame body (10), and wherein the pair of the first adapters (A1) is configured to be removed when switching from the second configuration to the first configuration by removing the first wheels (12) and by subsequently removing the first adapters (A1) and re-attaching the first wheels (12), wherein, more preferably, each wheel receiving section (121) comprises a body (1211) with an opening (1212) in which a wheel axle (12A) of a respective first wheel (12) is releasably couplable, wherein each first adapter (A1) comprises an end part that is provided with an opening (A11) that allows the end part to be arranged over the body (1211) of the wheel receiving section (121), wherein, in the second configuration, each first adapter (A1) is preferably configured to be rotatable about a rotational axis that is parallel to the wheel axle (12A) of the respective first wheel (12).

9. The assembly (1) according to any of the claims 2-8, further comprising a pair of second adapters (A2), wherein each second adapter (A2) is preferably configured to be removably coupled to frame body (10) at the upper side, wherein, in the first configuration, the child supporting device (200, 300) is coupled to the frame body (10) using the pair of second adapters (A2).

10. The assembly (1) according to any of the claims 2-9, wherein the frame body (10) comprises a pair of joint members (101), each joint member (101) preferably being configured to be coupled to a respective end of the push bar (30) in the first configuration;
wherein the frame body (10) further comprises:
a pair of first arms (102) that each extend between a respective first wheel receiving section (121) and a respective joint member (101);
a pair of second arms (103) that each extend from a respective joint member (101) towards the lower side, wherein an end of each second arm (103) remote from the corresponding joint member (101) is hingedly coupled to the supporting member (11);
wherein each first arm (102) comprises a first sub-arm (1021), a second sub-arm (1022), and a first arm hinge (1023) configured to allow the first sub-arm (1021) and second sub-arm (1022) to pivot relative to each other;
wherein each first sub-arm (1021) is arranged in between the corresponding first wheel receiving section (121) and the corresponding first arm hinge (1023), wherein each second sub-arm (1022) is arranged in between the corresponding first arm hinge (1023) and the corresponding joint member (101);
wherein each second sub-arm (1022) is hingedly coupled to the corresponding joint member (101), and wherein each first sub-arm (1021) is hingedly coupled to the support member (11);
wherein each first arm hinge (1023) preferably comprises a resilient element (1024) resisting the first sub-arm (1021) pivoting towards the second sub-arm (1022), and/or wherein, in so far as depending on claim 6, the first coupling units (C1) are preferably provided in the joint members (101).

11. The assembly (1) according claim 10, wherein the plurality of wheels (12, 13) comprises at least one second wheel (13) that is rotatably coupled to a respective wheel receiving section (131) of the frame body (10);
wherein the end of each second arm (103) remote from the corresponding joint member (101) is preferably connected to, either directly or through a further tubular member, or comprises the wheel receiving section (131) to which the at least one second wheel (13) is coupled;
wherein the at least one second wheel (13) preferably comprises a pair of second wheels (13) and/or wherein the first wheels (12) are rear wheels and wherein the at least one second wheel (13) is a front wheel;
wherein the wheel receiving section (131) for each second wheel (13) is preferably configured to allow the second wheel (13) to swivel, wherein the wheel receiving section (131) for each second wheel (13) comprises a swivel limiter that is configured to be operable in a first state in which it does not limit a swiveling angle of the second wheel, and in a second state in which it limits the swiveling angle to be in a predefined range, said predefined range being from 180+A degrees to 180-A degrees, wherein 0 degrees corresponds to the position of the second wheel when the assembly is used in the first configuration and is moved straight ahead, wherein A is preferably less than 160 degrees, more preferably less than or equal to 145 degrees, wherein the swivel limiter is manually operable, wherein each swivel limiter preferably comprises a slider (1311) and at least one limiting element (1312), wherein, when the corresponding second wheel (13) swivels, the at least one limiting element (1312) performs a rotating movement together with the second wheel (13) and the slider (1311) remains stationary relative to the frame body (10), wherein, when the swivel limiter is operating in the first state, the slider (1311) is in a first position allowing the corresponding second wheel (13) to swivel freely, and wherein, when the swivel limiter is operating in the second state, the slider (1311) is in a second position blocking the at least one limiting element (1312) to rotate further when the at least one limiting element (1312) comes into contact with the slider (1311) thereby limiting the swiveling angle of the second wheel (13).

12. The assembly (1) according to any of the claims 2-11, wherein the push bar (30) comprises a pair of outer tubular members (31), and a U-shaped tubular member (32) of which ends are received in the pair of outer tubular members (31);
wherein the U-shaped tubular member (32) is configured to be telescopically adjustable in the pair of the outer tubular members (31);
wherein, in so far as depending on claim 6, an end of each outer tubular member (31) remote from the U-shaped tubular member (32) is provided or coupled with a respective second coupling unit (C2).

13. A device for transporting a child comprising the assembly (1) as defined in any of the claims 2-12 configured in the first or second configuration.

14. A travel cot (200) comprising a child supporting area configured to support one or more children, wherein the child supporting area is configured to be transformable between:
a first state in which the child supporting area is defined by a substantially flat supporting surface allowing a child to lie on the supporting surface; and
a second state in which part of the child supporting area is arranged downset from a remainder of the child supporting area allowing the one or more children to seat on the remainder of the child supporting area while feet of the one or more children are supported by the downset part of the child supporting area.

15. The travel cot (200) according to claim 14, comprising a bottom wall (210) defining a child supporting area and a side wall (220), the travel cot (200) being configured to accommodate a child inside the travel cot (200) on a first side of the bottom wall (210);
wherein the bottom wall (210) comprises a first part (211), a second part (212), and a third part (213) arranged in between the first part (211) and second part (212);
wherein the third part (213) comprises a first subpart (213A) and a second subpart (213B), wherein the second subpart (213B) connects the first subpart (213A) to the second part (212);
wherein the travel cot (200) comprises a flexible supporting element (214) that extends on a second side of the bottom wall (210) opposite to the first side, wherein travel cot (200) is configurable in:
a first state, corresponding to the first state of the child supporting area, in which the first part (211), second part (212), and third part (213) are arranged in line;
a second state, corresponding to the second state of the child supporting area, in which the flexible supporting element (214) supports the first subpart (213A) at a height position remote from a height position of the first and second parts (211, 212);
wherein, when the travel cot (200) is configured in the second state, the travel cot (200) is preferably configured to allow a child to sit on the first or second part (211, 212) while supporting feet of the child by the first subpart (213A); and/or
wherein the side wall (220) preferably comprises a circumferential ridge (221) that supports the first and second parts (211, 212) of the bottom wall (210), and that supports the third part (213) of the bottom wall (210) when the travel cot (200) is configured in the first state.
